# EUROPEAN PATENT APPLICATION

(11) **EP 0 657 981 A1**
(43) Date of publication of application: **14.06.1995**
(21) Application number: 92912296.8
(22) Date of filing: 22.05.1992
(51) Int. Cl.: H02J 7/00

(54) **CIRCUIT AND APPARATUS FOR RECHARGING STORAGE BATTERIES OR ELECTRIC CELLS AND OTHER SPECIFIC USE THEREOF**

(30) Priority: 25.05.1991 ES 9101267
(71) Applicant: BORJA BAIXAULI, Salvador, E-046900 Torrente (ES); PLANELLS ALMERICH, Francisco, E-046900 Torrente (ES)
(72) Inventor: BORJA BAIXAULI, Salvador, E-046900 Torrente (ES); PLANELLS ALMERICH, Francisco, E-046900 Torrente (ES)
(74) Representative: Sanz-Bermell Martinez, Alejandro
(86) International application number: ES9200044
(87) International publication number: WO9222119

(57) **Abstract**

The apparatus is comprised of a circuit wherein an alternating current input is connected in series to a lighting lamp or resistor, or other specific use, which produces a residual consumption, and a rectifier or sets of rectifiers which are also connected in series to said circuit and have outputs of direct current switched to the charger, which may also be used as lamp, resistor, etc., at the same time as the charge is effected or without the charge being effected. Application to the recharging of storage batteries in household appliances and/or other electric apparatuses.

## Description

This invention has as its aim a circuit and device with a specific function, for example a light, heater, ventilator that has a common operation output with said device, so that the former can be used without the latter, which when connected to accumulators, batteries or electric cells recharges the same. This invention has two essentially identical embodiments, with the second being provided with a greater number of rectifiers being more suitable for charging more powerful batteries, which, due to carrying a more rectified current, enable greater and faster efficiency when charging, both as regards batteries and electric cells of any kind.

Known technical antecedents do not coincide with the essence of this application, but we shall nevertheless mention the following:
Patent ES P8603535 for a power system for batteries and electronic equipment which work by battery when there is no mains supply, fitted with a booster/reducing divider, that requires converter filters and requires a function of maintaining the voltage at a predetermined level. The new patent avoids all these disadvantages, being only a charger suitable for any device that may receive a charge.

Patent no. ES P0549608 for charging equipment for electrical traction batteries, made up of a microprocessor that receives information as regards the mains supply, the connections of the lines, voltage at the output of the rectifier and current sensor, all of this being simplified in the new invention with the technical and economic advantages implied.

Patent no. ES P0498043 for a voltage regulation device for direct current applied to an alternator flywheel, made up of an electronic device that substitutes a resistance for a transistor applied to an alternator flywheel, which produces, through a flywheel generator, a positive voltage, completely different from the assembly which we are now concerned with, that has no moving parts or transistors or complex circuitry.

The present invention consists of a circuit made up of a device that determines an electrical consumption, set out in series with a rectifier or several rectifiers in series layout, provided at their direct current outputs with a commuted switch, in such a way that the use of the device set out in series in said circuit is possible in either of the two positions of the commuted switch if there is an accumulator fitted, having to change to the charge position if there is an accumulator, and to the no charge position if said accumulator is removed due to having been recharged. It may have Led lights to show which circuit is operating in either case, whether only that of the household electrical device or that of the charger at the same time as this.

In order to make the following explanation clearer, two pages of drawings are enclosed which represent the essence of this invention in two figures.

Figure 1 shows a view of the simple circuit with one sole rectifier.

Figure 2 shows a view of the same circuit fitted with a greater number of rectifiers.

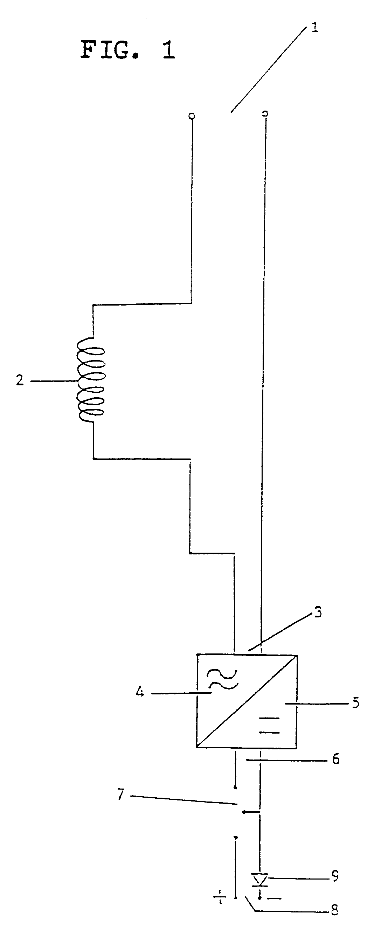

In Figure 1 number 1 indicates the device's alternating current input from the electrical mains, producing the completion of a circuit made up of the resistance 2 that determines a consumption and the rectifier 3 whose alternating current input 4 produces a transformation 5 of rectified direct current, whose output 6 has a commuted switch 7, which completes the direct current circuit in said switch, or which closes the circuit when there is a device ready to be charged at the charge output 8, whether this be an accumulator, battery electric cell, etc., which completes said circuit. At the negative pole of the charge circuit there is a diode 9 that prevents the return of the current. This switch's function is to complete the circuit. Before and behind this switch there could be Led lights that allow one to know which circuit is in operation at any time. The characteristics of this circuit allow the recharging of any kind of battery cell, accumulator or battery, whatever voltage these may be.

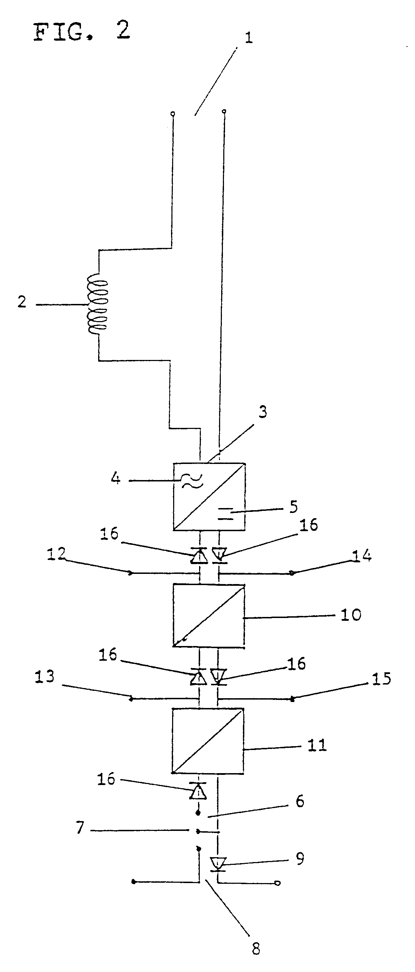

In the same way as in the previous figure, we can in Figure 2 appreciate, marked as 1, the alternating current input of the electrical mains device, completing a circuit made up of the resistance 2 that determines a consumption, and the rectifier 3 whose alternating current input 4 carries out a transformation 5 of rectified direct current.

The direct current is rectified again with one or two further rectifiers, such as those indicated as 10 and 11, each of these having a terminal or current output that can be used in a combined way in accordance with the necessary requirements for its use or of the intensity for recharging, thus obtaining the variation of the amperage and voltage. Said terminals are marked as 12, 13, 14 and 15, and between each rectifier and the next there are a pair of diodes such as those marked as 16. The back output 16 has a commuted switch 7 that completes either the direct circuit at said switch or completes the circuit when there is at charge output 8 a device ready to be charged, accumulator, battery or electric cell that produces the completion of said circuit. Nevertheless, power can also be taken in without requiring the closure of the circuit at the points indicated as 7 or 8, at the terminals of outputs 12, 13, 14 and 15. At the negative pole of the charge output there is also a diode 9 that prevents the return of the current. This switch's function is to complete the circuit. In front and behind each output there may be led lights to allow one to know which circuit is in operation at any time. The characteristics of this circuit mean that it may recharge any type of electric cell, accumulator or battery, whatever voltage these may be, with an advantage over that of the circuit explained in Figure 1, since as it is possible to choose the most suitable output, it can carry out the charging in a quicker and more efficient way than the previous one, although this is made up of a greater number of components.

## Claims

1. Circuit and apparatus for recharging storage batteries or electric cells, and other specific use thereof, characterized in that it is made up of a circuit properly said that has a resistance, household electrical item, lamp, etc., in series with a rectifier, at whose output there is a commuted switch (7) that determines the completion of the circuit, either during charging through the charge output (8) or through said switch (7), possibly having a Led light to come on when each of both these circuits is completed, and being fitted with a diode (9) at the negative pole that prevents the return of the current.

2. Circuit and apparatus for recharging storage batteries or electric cells, and other specific use thereof, characterized in that the circuit is made up of a set of rectifiers (5, 10, 11) in series, between which there is at each pole a diode, each one of the outputs (12, 13, 14, 15) of each rectifier determining the existence of a terminal that can be used independently, apart from the terminals of the output (8), possibly taking in a commuted switch for completing the circuit.
